# EUROPEAN PATENT SPECIFICATION

(11) **EP 2 821 258 B1**
(45) Date of publication and mention of the grant of the patent: **31.10.2018**
(21) Application number: 14172153.0
(22) Date of filing: 12.06.2014
(51) Int. Cl.: B60C 11/12

(54) **Pneumatic tire**
Luftreifen
Pneu

(30) Priority: 02.07.2013 KR 20130077098
(43) Date of publication of application: 07.01.2015
(73) Proprietor: Kumho Tire Co., Inc., Gwangsan-gu Gwangju 506-711 (KR)
(72) Inventor: Tak, In-Yong, 506-040 Gwangju (KR)
(74) Representative: Schweitzer, Klaus

(56) References cited:
- EP-A1- 1 533 141
- WO-A1-2007/145603
- US-A- 5 783 002

## Description

### [BACKGROUND OF THE INVENTION]

### 1. Field of the Invention

The present invention relates to a pneumatic tire, and more specifically, to a pneumatic tire which includes a sipe formed in a tread block capable of minimizing slippage on a snowy or icy road in winter while increasing rigidity of the tread block, thereby significantly improving braking and steering performances on a wet road as well as a dry road.

### 2. Description of the Related Art

It is necessary to increase a frictional force between a road and a tire in order to minimize the slippage of the tire on the road (snowy or icy road) in winter. In order to increase such a frictional force, concave and convex portions (sipes) are provided in a tread block at a constant interval. A conventional pneumatic tire is provided with sipes having a vertical geometric shape relative to a tangential direction of the tread block (see Korean Patent Laid-Open Publication No. 10-2009-0041158).

However, in the above-described pneumatic tire, stiffness of the tread block is decreased, thereby resulting in a decrease of the frictional force between a road and a tire. As a result, this has been a major cause of degradation in braking or steering performances.

The sipe wall described in WO2007/145603 has a structure in which upper protrusions, intermediate protrusions, and lower protrusions are formed on a surface of the sipe wall in the shape of a checkerboard; and two sipe walls are engaged with each other. This design causes problems because all of the upper protrusions, intermediate protrusions, and lower protrusions have an "angled cylindrical" shape, such that physical stress is focused in the angled portions thereof, which causes an intensified degradation of the tire.

### [SUMMARY OF THE INVENTION]

In consideration of the above-mentioned circumstances, it is an object of the present invention to provide a pneumatic tire having significantly improved braking and steering performances on a wet road as well as a dry road by providing sipes with a shape capable of minimizing slippage on a snowy or icy road in winter while increasing the rigidity of the tread block.

In order to achieve the above object, there is provided a pneumatic tire having a sipe formed in a tread block, including: a pair of sipe wall(s) which form the sipe and have a first sipe wall and a second sipe wall facing each other, wherein the first sipe wall includes a plurality of upper protrusions having a height reduced from a surface of the tread block to a lower side thereof, a plurality of lower protrusions having a height reduced from a bottom of the sipe to an upper side thereof, and intermediate convex protrusions disposed between the upper protrusion and the lower protrusion in a thickness direction of the tread block, and the second sipe wall is formed with a phase difference of 1/2 of a pitch of the upper protrusion or the lower protrusion with respect to the first sipe wall so as to engage with the first sipe wall.

An intermediate concave protrusion is formed between the two adjacent intermediate convex protrusions, and an intermediate convex groove corresponding to the intermediate concave protrusion is formed in the intermediate convex protrusions.

The upper protrusion and the lower protrusion have a same phase difference and same shape.

According to present invention, in order to reinforce the strength of the tread block, the sipe includes a pair of sipe wall (s) having 3D cross sections so as to engage the pair of sipe wall(s) with each other, and thereby increasing the rigidity of the tread block. Therefore, the pneumatic tire of the present invention has significantly improved braking and steering performances on a wet road as well as a dry road compared with a conventional pneumatic tire of the related art.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a perspective view illustrating a sipe formed in a pneumatic tire according to a preferred embodiment of the present invention;
FIG. 2 is a vertical cross-sectional view of the sipe illustrated in FIG.1;
FIG. 3 is a horizontal cross-sectional view of the sipe illustrated in FIG.1 along line a-a' in FIG.2;
FIG. 4 is a perspective view illustrating a first sipe wall of the sipe illustrated in FIG.1; and
FIG. 5 is a plane view of the first sipe wall illustrated in FIG.4.

### [DETAILED DESCRIPTION OF THE INVENTION]

Hereinafter, preferable embodiments of the present invention will be described with reference to the accompanying drawings. Referring to the drawings, wherein like reference characters designate like or corresponding parts throughout the several views. In the embodiments of the present invention, a detailed description of publicly known functions and configurations that are judged to be able to make the purport of the present invention unnecessarily obscure are omitted.

A sipe disclosed in the present invention has a structure capable increasing the rigidity of the tread block having 3D protrusions formed so as to protrude toward a facing wall body while maintaining an interval formed between sipe wall(s) included in the sipe, compared with a conventional pneumatic tire of the related art.

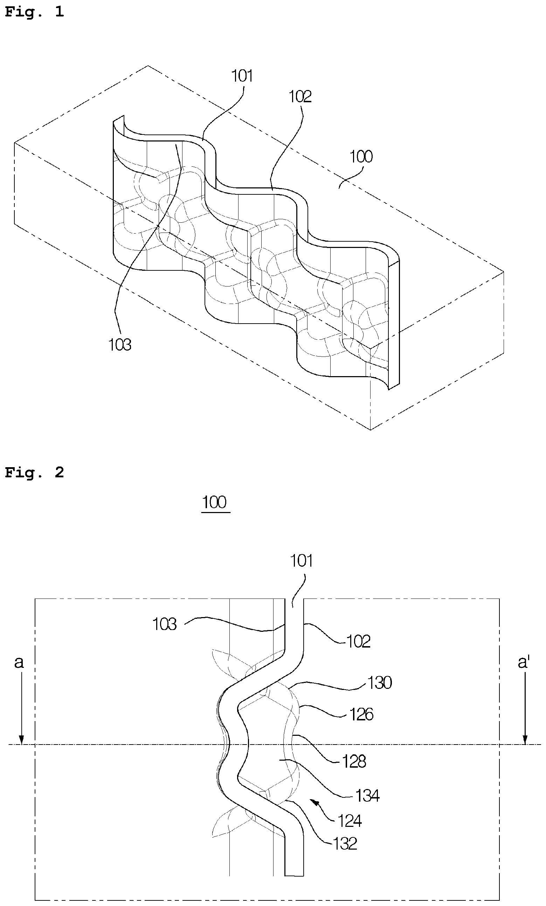

FIG. 1 illustrates a tread block 100 provided with a sipe 101 of a pneumatic tire according to a preferred embodiment of the present invention.

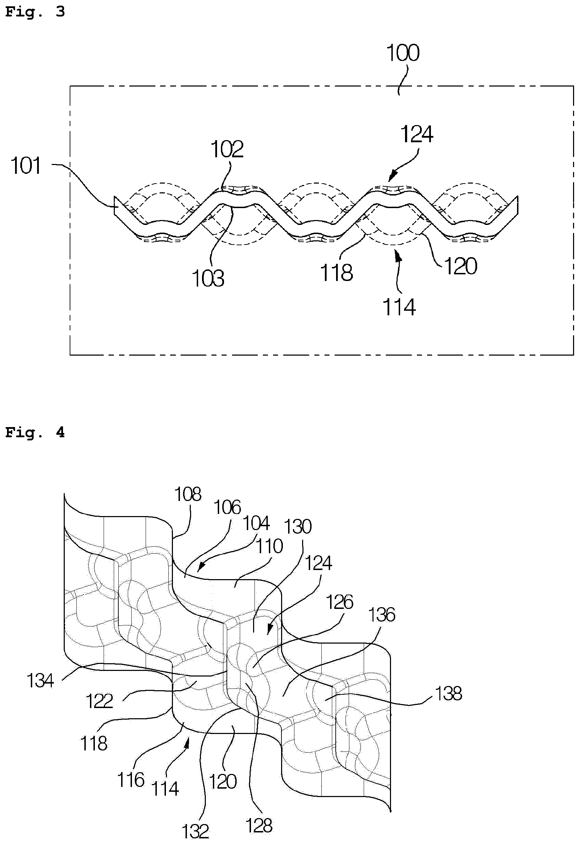

The sipe 101 is formed in a shape of a sinusoid as shown in FIG. 1 when seen from a plan view. The sipe 101 includes a pair of sipe wall(s) 102 and 103 which are separated at a constant interval in a longitudinal direction as well as a transverse direction thereof, as shown in Fig. 2 and FIG. 3.

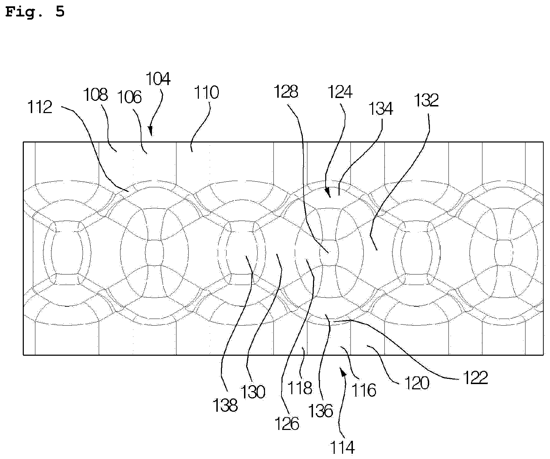

As shown in FIGS. 4 and 5, a first sipe wall 102 includes a plurality of upper protrusions 104, a plurality of lower protrusions 114, and intermediate convex protrusions 124 and intermediate concave protrusions 138 which are formed between the upper protrusion 104 and the lower protrusion 114. The number and size of the upper protrusions 104, the lower protrusions 114, and the intermediate convex protrusions 124 and concave protrusions 138 may be varied according to a specification of a practical design.
The upper protrusion 104 has a substantial partial sphere shape which is formed in a shape of a sinusoid, as described above, and includes a surface of the tread block 100 as one face. The upper protrusion 104 has a height gradually reduced from a surface of the tread block 100 to a lower side of the sipe 101. Herein, the height of the upper protrusion 104 is defined in a direction orthogonal to the thickness direction of the tread block 100, and at the same time in a width direction of the sipe 101. The upper protrusions 104 disposed at positions in a same thickness direction of the tread block 100 have the same height.

Accordingly, the upper protrusion 104 has a front curved surface 106, lateral curved surfaces 108 and 110 around the front curved surface 106, and a downwardly curved surface 112 which is connected to the front curved surface 106 and the lateral curved surfaces 108 and 110 and has a height gradually reduced toward the lower side thereof.

On the other hand, the lower protrusion 114 has a substantial partial sphere shape which is formed in the shape of a sinusoid, as described above, and has a maximum height at a position identical with a bottom surface of the sipe 101. The lower protrusion 114 has a height gradually increased toward the upper side of the sipe 101.

Accordingly, the lower protrusion 114 includes a front curved surface 116, lateral curved surfaces 118 and 120 around the front curved surface 116, and an upwardly curved surface 122 which is connected to the front curved surface 116 and the lateral curved surfaces 118 and 120 and has a height gradually reduced toward the lower side thereof.

The first sipe wall 102 further includes the intermediate convex protrusion 124 disposed between the upper protrusion 104 and the lower protrusion 114 in a thickness direction of the tread block 100.

The a front curved surface 126 having a maximum height in the intermediate convex protrusion 124 is positioned between a pair of the upper protrusions 104 and a pair of the lower protrusions 114. An intermediate convex groove 128 with a concavely rounded surface is formed in a center portion of the front curved surface 126. The intermediate concave protrusion 138, which is laterally continuously elongated to the same position in the thickness direction of the tread block 100 so as to connect to the intermediate convex protrusion 124, has a shape corresponding to The intermediate convex groove 128.

The intermediate convex protrusion 124 has lateral curved surfaces 130 and 132 connected to the lateral intermediate concave protrusion 138 around the front curved surface 126, and an upwardly curved surface 134 and a downwardly curved surface 136 which are connected to the upper protrusion 104 and the lower protrusion 114. The lateral curved surfaces 130 and 132, as well as the upwardly curved surface 134 and the downwardly curved surface 136 are connected to the upper protrusion 104, the lower protrusion 114 and the intermediate concave protrusion 138 while having a continuous curved surface.

In addition, the upper protrusion 104 and the lower protrusion 114 are disposed so as to have a same phase with each other. That is, a shape of the sipe 101 seen in FIG. 1 (a shape seen from the surface of the tread block 100) is the same as a shape of the bottom surface thereof. As described above, the intermediate convex protrusion 124 is formed between the pair of the upper protrusions 104 and the pair of the lower protrusions 114 in a center position in the thickness direction of the tread block 100.

As a result, the first sipe wall 102 has a unique structure including the intermediate convex groove 128 formed on the intermediate convex protrusion 124 in a embossed shape and the intermediate concave protrusion 138 disposed at a side of the intermediate convex groove 128 as a whole.

The second sipe wall 103 of the pair of sipe wall(s) is formed in a phase difference of 1/2 of a pitch of the upper protrusion 104 or the lower protrusion 114 with respect to the first sipe wall 102 so as to engage with the first sipe wall 102. That is, the first sipe wall 102 and the second sipe wall 103 are shifted by 1/2 of the pitch of the upper protrusion 104 or the lower protrusion 114 with respect to each other.

As a result, in the pneumatic tire of the present invention, the sipe wall 102 is supported by the upper protrusion 104, the lower protrusion 114 and the intermediate convex protrusion 124, which are alternately formed with respect to each other, thereby significantly increasing the rigidity of the tread block, compared with a conventional pneumatic tire having the sipe of the related art.

While the present invention has been described with reference to the preferred embodiments, it will be understood by those skilled in the related art that various modifications and variations may be made therein without departing from the scope of the present invention as defined by the appended claims.

### * Explanation of Reference Numerals of Main Parts of the Drawings

100: tread block
101: sipe
102, 103: sipe wall
104: upper protrusion
106, 116, 126: front curved surface
108,110; 118,120 ; 130,132: lateral curved surface
112, 136: downwardly curved surface
122, 134: upwardly curved surface
114: lower protrusion
124: intermediate convex protrusions
126: front curved surface
128: intermediate convex groove
138: intermediate concave protrusion

## Claims

1. A pneumatic tire having a sipe (101) formed in a tread block (100), comprising:
a pair of sipe wall (s) (102 and 103) which form the sipe (101) and have a first sipe wall (102) and a second sipe wall (103) facing each other,
wherein the first sipe wall (102) includes a plurality of upper protrusions (104) having a height reduced from a surface of the tread block (100) to a lower side thereof, a plurality of lower protrusions (114) having a height reduced from a bottom of the sipe (101) to an upper side thereof, and intermediate convex protrusions (124) disposed between the upper protrusions (104) and the lower protrusions (114) in a thickness direction of the tread block (100),
the second sipe wall (103) is formed with a phase difference of 1/2 of a pitch of the upper protrusion (104) or the lower protrusion (114) with respect to the first sipe wall (102) so as to engage with the first sipe wall (102),
the upper protrusion (104) and the lower protrusion (114) are disposed so as to have a same phase with each other and the same shape, **characterized in that**
the upper protrusion (104) has a front curved surface (106), lateral curved surfaces (108 and 110) around the front curved surface (106), and a downwardly curved surface (112) which is connected to the front curved surface (106) and the lateral curved surfaces (108 and 110) and has a height gradually reduced toward the lower side thereof,
the lower protrusion (114) has a substantial partial sphere shape which is formed in the shape of a sinusoid, and has a maximum height at a position identical with a bottom surface of the sipe (101), the lower protrusion (114) has a height gradually increased toward the upper side of the sipe (101),
the lower protrusion (114) includes a front curved surface (116), lateral curved surfaces (118 and 120) around the front curved surface (116), and an upwardly curved surface (122) which is connected to the front curved surface (116) and the lateral curved surfaces (118 and 120) and has a height gradually reduced toward the lower side thereof,
the first sipe wall (102) further includes the intermediate convex protrusion (124) disposed between the upper protrusion (104) and the lower protrusion (114) in a thickness direction of the tread block (100), the intermediate convex protrusion (124) includes
a front curved surface (126) having a maximum height in the intermediate convex protrusion (124) and is positioned between a pair of the upper protrusions (104) and a pair of the lower protrusions (114),
an intermediate convex groove (128) with a concavely rounded surface is formed in a center portion of the front curved surface (126) of the intermediate convex protrusion (124), an intermediate concave protrusion (138), which is formed between the two adjacent intermediate convex protrusions (124) and is laterally continuously elongated to the same position in the thickness direction of the tread block (100) so as to connect to the intermediate convex protrusion (124), has a shape corresponding to the intermediate convex groove (128),
the intermediate convex protrusion (124) has lateral curved surfaces (130 and 132) connected to the lateral intermediate concave protrusion (138) around the front curved surface (126) of the intermediate convex protrusion (124), and an upwardly curved surface (134) and a downwardly curved surface (136) which are connected to the upper protrusion (104) and the lower protrusion (114), the lateral curved surfaces (130 and 132), as well as the upwardly curved surface (134) and the downwardly curved surface (136) are connected to the upper protrusion (104), the lower protrusion (114) and the intermediate concave protrusion (138) while having a continuous curved surface.

## Patentansprüche

1. Luftreifen, der eine in einem Blockprofil (100) ausgebildete Lamelle (101) aufweist, umfassend:
ein Paar von Lamellenwänden (102 und 103), die die Lamelle (101) bilden und eine erste Lamellenwand (102) und eine zweite Lamellenwand (103) aufweisen, die einander zugewandt sind,
wobei die erste Lamellenwand (102) eine Vielzahl von oberen Vorsprüngen (104), die eine Höhe aufweisen, die sich von einer Oberfläche des Blockprofils (100) zu einer unteren Seite desselben verringert, eine Vielzahl von unteren Vorsprüngen (114), die eine Höhe aufweisen, die sich von einem Boden der Lamelle (101) zu einer oberen Seite derselben verringert, und zwischenliegende konvexe Vorsprunge (124) umfasst, die zwischen den oberen Vorsprüngen (104) und den unteren Vorsprüngen (114) in einer Dickenrichtung des Blockprofils (100) angeordnet sind,
wobei die zweite Lamellenwand (103) mit einer Phasendifferenz von 1/2 eines Abstands des oberen Vorsprungs (104) oder des unteren Vorsprungs (114) in Bezug auf die erste Lamellenwand (102) gebildet ist, um mit der ersten Lamellenwand (102) einzugreifen,
wobei der obere Vorsprung (104) und der untere Vorsprung (114) so angeordnet sind, dass sie die gleiche Phase zueinander und die gleiche Form aufweisen,
**dadurch gekennzeichnet, dass**
der obere Vorsprung (104) eine vordere gekrümmte Fläche (106), seitliche gekrümmte Flächen (108 und 110) um die vordere gekrümmte Fläche (106) sowie eine nach unten gekrümmte Fläche (112) aufweist, die mit der vorderen gekrümmten Fläche (106) und den seitlichen gekrümmten Flächen (108 und 110) verbunden ist und eine Höhe aufweist, die sich allmählich zu der unteren Seite derselben hin verringert,
wobei der untere Vorsprung (114) eine wesentliche Teilkugelform aufweist, die in Form einer Sinuskurve ausgebildet ist, und eine maximale Höhe an einer Stelle, die identisch mit einer Bodenfläche der Lamelle (101) ist, aufweist, wobei der untere Vorsprung (114) eine Höhe aufweist, die sich allmählich zu der oberen Seite der Lamelle (101) hin vergrößert,
wobei der untere Vorsprung (114) eine vordere gekrümmte Fläche (116), seitliche gekrümmte Flächen (118 und 120) um die vordere gekrümmte Fläche (116) und eine nach oben gekrümmte Fläche (122) umfasst, die mit der vorderen gekrümmten Fläche (116) und den seitlichen gekrümmten Flächen (118 und 120) verbunden ist und eine Höhe aufweist, die sich allmählich zu der unteren Seite derselben hin verringert,
wobei die erste Lamellenwand (102) ferner den zwischenliegenden konvexen Vorsprung (124) umfasst, der zwischen dem oberen Vorsprung (104) und dem unteren Vorsprung (114) in einer Dickenrichtung des Blockprofils (100) angeordnet ist,
wobei der zwischenliegende konvexe Vorsprung (124) eine vordere gekrümmte Fläche (126) umfasst, die eine maximale Höhe in dem zwischenliegenden konvexen Vorsprung (124) aufweist und sich zwischen einem Paar der oberen Vorsprünge (104) und einem Paar der unteren Vorsprünge (114) befindet,
wobei eine zwischenliegende konvexe Nut (128) mit einer konkav gerundeten Fläche in einem mittleren Abschnitt der vorderen gekrümmten Fläche (126) des zwischenliegenden konvexen Vorsprungs (124) ausgebildet ist, wobei ein zwischenliegender konkaver Vorsprung (138), der zwischen den beiden benachbarten zwischenliegenden konvexen Vorsprüngen (124) ausgebildet ist und seitlich kontinuierlich bis zu der gleichen Stelle in der Dickenrichtung des Blockprofils (100) verlängert ist, um sich mit dem zwischenliegenden konvexen Vorsprung (124) zu verbinden, eine Form aufweist, die der zwischenliegenden konvexen Nut (128) entspricht,
wobei der zwischenliegende konvexe Vorsprung (124) seitliche gekrümmte Flächen (130 und 132), die mit dem seitlichen zwischenliegenden konkaven Vorsprung (138) um die vordere gekrümmte Fläche (126) des zwischenliegenden konvexen Vorsprungs (124) verbunden sind, sowie eine nach oben gekrümmte Fläche (134) und eine nach unten gekrümmte Fläche (136), die mit dem oberen Vorsprung (104) und dem unteren Vorsprung (114) verbunden sind, aufweist, wobei die seitlichen gekrümmten Flächen (130 und 132) sowie die nach oben gekrümmte Fläche (134) und die nach unten gekrümmte Fläche (136) mit dem oberen Vorsprung (104), dem unteren Vorsprung (114) und dem zwischenliegenden konkaven Vorsprung (138) verbunden sind, während sie eine kontinuierliche gekrümmte Fläche aufweisen.

## Revendications

1. Pneu ayant une rainure (101) formée dans un pavé (100), comprenant :
une paire de paroi(s) de rainure (102 et 103) qui forment la rainure (101) et ont une première paroi de rainure (102) et une seconde paroi de rainure (103) se faisant face,
dans lequel la première paroi de rainure (102) comprend une pluralité de saillies supérieures (104) ayant une hauteur réduite entre une surface du pavé (100) et un côté inférieur de celui-ci, une pluralité de saillies inférieures (114) ayant une hauteur réduite entre une partie inférieure de la rainure (101) et un côté supérieur de celle-ci, et des saillies convexes intermédiaires (124) disposées entre les saillies supérieures (104) et les saillies inférieures (114) dans une direction d'épaisseur du pavé (100),
la seconde paroi de rainure (103) est formée avec une différence de phase de ½ d'un pas de la saillie supérieure (104) ou de la saillie inférieure (114) par rapport à la première paroi de rainure (102) de façon à venir en prise avec la première paroi de rainure (102), la saillie supérieure (104) et la saillie inférieure (114) sont disposées de façon à avoir une même phase l'une avec l'autre et la même forme, **caractérisé en ce que** la saillie supérieure (104) a une surface avant incurvée (106), des surfaces latérales incurvées (108 et 110) autour de la surface avant incurvée (106), et une surface incurvée vers le bas (112) qui est connectée à la surface avant incurvée (106) et aux surfaces latérales incurvées (108 et 110), et a une hauteur réduite progressivement vers le côté inférieur de celles-ci,
la saillie inférieure (114) a une forme de sphère partielle substantielle qui est formée dans la forme d'une sinusoïde, et a une hauteur maximale au niveau d'une position identique à une surface inférieure de la rainure (101), la saillie inférieure (114) a une hauteur augmentée progressivement vers le côté supérieur de la rainure (101),
la saillie inférieure (114) comprend une surface avant incurvée (116), des surfaces latérales incurvées (118 et 120) autour de la surface avant incurvée (116), et une surface incurvée vers le haut (122) qui est connectée à la surface avant incurvée (116) et aux surfaces latérales incurvées (118 et 120) et a une hauteur réduite progressivement vers le côté inférieur de celles-ci,
la première paroi de rainure (102) comprend en outre la saillie convexe intermédiaire (124) disposée entre la saillie supérieure (104) et la saillie inférieure (114) dans une direction d'épaisseur du pavé (100),
la saillie convexe intermédiaire (124) comprend une surface avant incurvée (126) ayant une hauteur maximale dans la saillie convexe intermédiaire (124) et est positionnée entre une paire de saillies supérieures (104) et une paire de saillies inférieures (114),
une rainure convexe intermédiaire (128) avec une surface arrondie de façon concave est formée dans une partie centrale de la surface avant incurvée (126) de la saillie convexe intermédiaire (124), une saillie concave intermédiaire (138), qui est formée entre les deux saillies convexes intermédiaires adjacentes (124) et est latéralement allongée en continu jusqu'à la même position dans la direction d'épaisseur du pavé (100) de façon à se connecter à la saillie convexe intermédiaire (124), a une forme correspondant à la rainure convexe intermédiaire (128),
la saillie convexe intermédiaire (124) a des surfaces latérales incurvées (130 et 132) connectées à la saillie concave intermédiaire latérale (138) autour de la surface avant incurvée (126) de la saillie convexe intermédiaire (124),
et une surface incurvée vers le haut (134) et une surface incurvée vers le bas (136) qui sont connectées à la saillie supérieure (104) et à la saillie inférieure (114), aux surfaces latérales incurvées (130 et 132), ainsi que la surface incurvée vers le haut (134) et la surface incurvée vers le bas (136) sont connectées à la saillie supérieure (104), à la saillie inférieure (114) et à la saillie concave intermédiaire (138) tout en ayant une surface incurvée en continu.
